# EUROPÄISCHE PATENTANMELDUNG

(11) **EP 0 730 010 A1**
(43) Veröffentlichungstag der Anmeldung: **04.09.1996**
(21) Anmeldenummer: 96102838.8
(22) Anmeldetag: 26.02.1996
(51) Int. Cl.: C09B 67/22, C09B 62/018

(54) **Mischungen von Reaktivfarbstoffen für marineblaue Farbtöne**

(30) Priorität: 03.03.1995 DE 19507461
(71) Anmelder: BASF AKTIENGESELLSCHAFT, 67056 Ludwigshafen (DE)
(72) Erfinder: Krallmann, Reinhold, 67273 Weisenheim (DE); Sülflow, Manfred, 67098 Bad Dürkheim (DE)

(57) **Zusammenfassung**

Mischungen von Reaktivfarbstoffen, enthaltend die Farbstoffe der Formeln 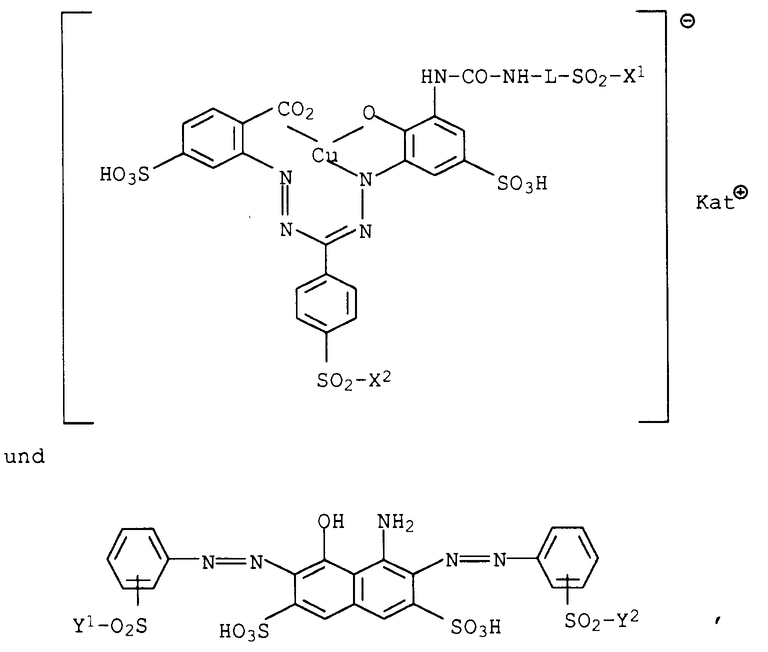 worin Kat^{⊕} ein Kation, L C₂-C₄-Alkylen und X¹, X², Y¹ und Y² Vinyl oder einen Rest der Formel C₂H₄-Q, worin Q für eine unter alkalischen Reaktionsbedingungen abspaltbare Gruppe steht, bedeuten, im Gewichtsverhältnis 20:80 bis 90:10, sowie ihre Verwendung zum Färben oder Bedrucken von Hydroxygruppen oder Stickstoffatome aufweisenden organischen Substraten.

## Beschreibung

Die vorliegende Erfindung betrifft neue Mischungen von Reaktivfarbstoffen, enthaltend die Farbstoffe der Formeln I und II 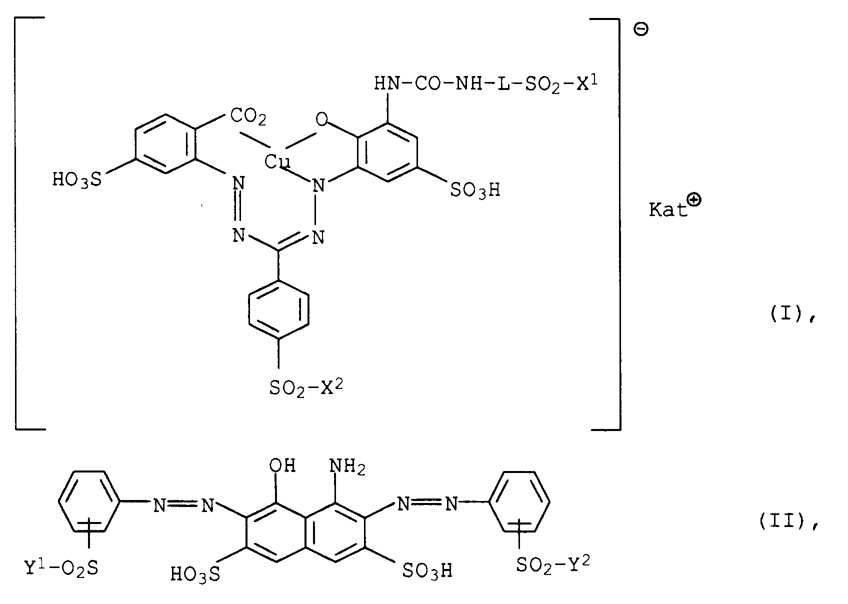 worin Kat^{⊕} das Äquivalent eines Kations, L C₂-C₄-Alkylen und X¹, X², Y¹ und Y² unabhängig voneinander jeweils Vinyl oder einen Rest der Formel C₂H₄-Q, worin Q für eine unter alkalischen Reaktionsbedingungen abspaltbare Gruppe steht, bedeuten, im Gewichtsverhältnis 20:80 bis 90:10, sowie ihre Verwendung zum Färben oder Bedrucken von Hydroxygruppen oder Stickstoffatome aufweisenden organischen Substraten.

Die handelsüblichen Reaktivfarbstoffe für marineblaue Färbungen weisen häufig verschiedene Nachteile auf. Beispielsweise zeigen Disazofarbstoffe mit 1-Amino-8-hydroxy-naphthalin-3,6-disulfonsäure als Kupplungskomponente in Abhängigkeit vom reaktiven Anker nur begrenzte Lichtechtheit oder begrenzte Waschbeständigkeit. Reaktivfarbstoffe auf Basis von 1:1-Kupferkomplexazofarbstoffen wiederum besitzen häufig eine ungenügende Farbstärke oder Peroxidbeständigkeit. Kupferformazanfarbstoffe ergeben in der Regel klare mittelblaue Farbtöne, wobei der Farbaufbau zum Marineblau zu gering ist.

Aufgabe der vorliegenden Erfindung war es nun, neue Mischungen von Reaktivfarbstoffen bereitzustellen, die bei ihrer Anwendung marineblaue Farbtöne ergeben und deren Färbungen und Drucke gute anwendungstechnische Eigenschaften, insbesondere hohe Lichtechtheit und hohe Waschbeständigkeit aufweisen.

Demgemäß wurden die eingangs näher bezeichneten Mischungen der Reaktivfarbstoffe der Formeln I und II gefunden.

Die Reaktivfarbstoffe der Formeln I und II sind jeweils in Form der freien Säure angegeben. Selbstverständlich werden auch deren Salze von den Patentansprüchen umfaßt. Geeignete Kationen sind z.B. die im folgenden unter der Definition von Kat^{⊕} genannten Metall- oder Ammoniumionen.

Kat^{⊕} in Formel I stellt das Äquivalent eines Kations dar. Es stellt entweder ein Proton dar oder leitet sich von Metall- oder Ammoniumionen ab. Metallionen sind insbesondere die Lithium-, Natrium- oder Kaliumionen. Unter Ammoniumionen im erfindungsgemäßen Sinne sind unsubstituierte oder substituierte Ammoniumkationen zu verstehen. Substituierte Ammoniumkationen sind z.B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch Hydroxylgruppen substituiert und/oder durch 1 bis 4 Sauerstoffatome in Etherfunktion unterbrochen sein kann.

Besonders als Kationen hervorzuheben sind Protonen oder Lithium-, Natrium- oder Kaliumionen, wobei die genannten Metallkationen ebenfalls bevorzugte Kationen sind, wenn die Reaktivfarbstoffe I und II in Salzform vorliegen.

Der Rest Q steht für eine unter alkalischen Reaktionsbedingungen abspaltbare Gruppe. Solche Gruppen sind z.B. Chlor, Brom, C₁-C₄-Alkylsulfonyl, Phenylsulfonyl, OSO₃H, SSO₃H, OP(O)(OH)₂, C₁-C₄-Alkylsulfonyloxy, Phenylsulfonyloxy, C₁-C₄-Alkanoyloxy, C₁-C₄-Dialkylamino oder ein Rest der Formel 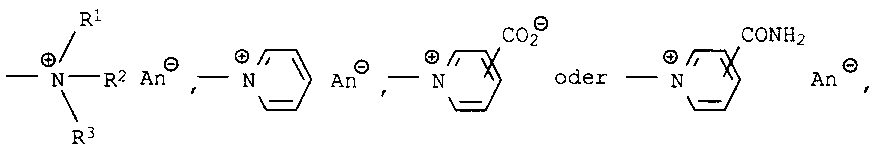 wobei R¹, R² und R³ gleich oder verschieden sind und unabhängig voneinander jeweils die Bedeutung von C₁-C₄-Alkyl oder Benzyl und An^{⊖} jeweils die Bedeutung eines Äquivalents eines Anions besitzen. Als Anionen können dabei z.B. Fluorid, Chlorid, Bromid, Iodid, Mono-, Di- oder Trichloracetat, Methylsulfonat, Phenylsulfonat oder 2- oder 4-Methylphenylsulfonat in Betracht kommen.

Rest L sind z.B. (CH₂)₂, (CH₂)₃, (CH₂)₄, CH(CH₃)CH₂ oder CH(CH₃)CH(CH₃).

Bevorzugt sind Farbstoffmischungen, die den Reaktivfarbstoff der Formel IIa 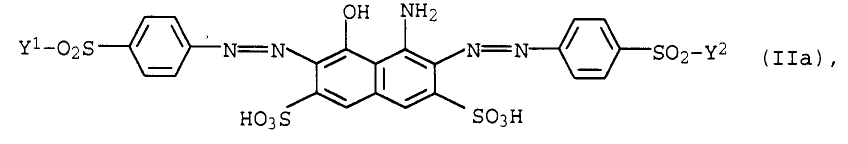 enthalten, in der Y¹ und Y² jeweils die obengenannte Bedeutung besitzen.

Weiterhin bevorzugt sind Farbstoffmischungen, die den Farbstoff der Formel I enthalten, in der L C₂-Alkylen bedeutet.

Weiterhin bevorzugt sind Farbstoffmischungen, die die Farbstoffe der Formeln I und II enthalten, worin X¹, Y¹ und Y² jeweils 2-Sulfatoethyl und X² 2-Chlorethyl bedeuten.

Besonders bevorzugt sind Mischungen von Reaktivfarbstoffen, enthaltend die Farbstoffe der Formeln Ia und IIb 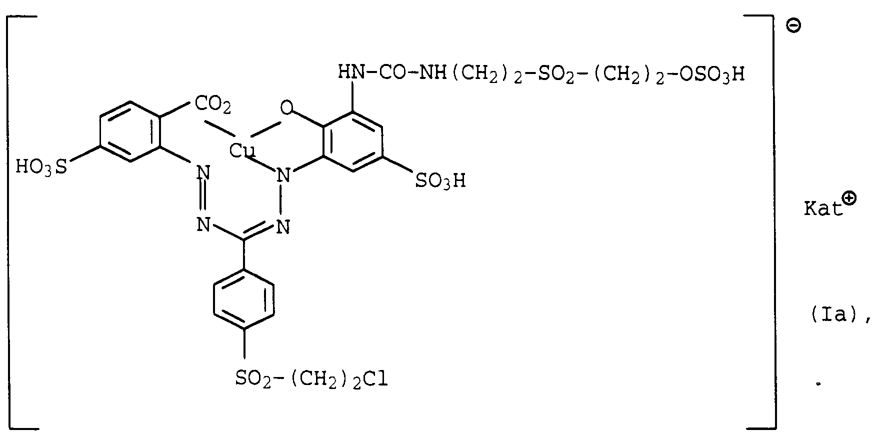 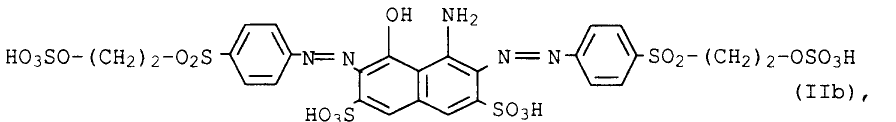 worin Kat^{⊕} die obengenannte Bedeutung besitzt.

Ebenfalls bevorzugt sind Farbstoffmischungen, die die Farbstoffe der Formeln I und II im Gewichtsverhältnis 30:70 bis 70:30 enthalten. Besonders bevorzugt sind weiterhin Farbstoffmischungen, die die Farbstoffe der Formeln I und II im Gewichtsverhältnis 40:60 bis 60:40 enthalten.

Bei den Farbstoffen der Formeln I und II handelt es sich um bekannte Produkte. Farbstoffe der Formel I sind z.B. aus der EP-A-592 980 bekannt. Beim Farbstoff der Formel IIb handelt es sich beispielsweise um C.I. Reactive Black 5 (20505).

Die Herstellung der erfindungsgemäßen Farbstoffmischungen erfolgt auf an sich bekanntem Weg, z.B. durch Mischen der jeweiligen Partner im genannten Gewichtsverhältnis. Gegebenenfalls können den neuen Mischungen weitere Komponenten, z.B. Hilfsmittel, wie Stellmittel, Dispergiermittel oder Entstaubungsmittel, oder weitere Farbstoffe, beispielsweise zum Nuancieren, zugesetzt werden. Es ist auch möglich, bereits fertige Farbstoffpräparationen der jeweiligen Partner oder fertige Farbstoffpräparationen mit reinen Farbstoffen abzumischen.

Die neuen Farbstoffmischungen eignen sich in vorteilhafter Weise zum Färben oder Bedrucken von Hydroxygruppen oder Stickstoffatome aufweisenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sich die neuen Farbstoffe zum Färben und Bedrucken von Textilmaterial auf der Basis von Wolle oder insbesondere von Baumwolle. Man erhält Ausfärbungen oder Drucke in marineblauen Farbtönen.

Insbesondere auf Substraten auf Basis von Cellulose werden farbstarke Färbungen mit guten Gebrauchsechtheiten, insbesondere mit hoher Lichtechtheit und guter Waschbeständigkeit erhalten.

Die folgenden Beispiele sollen die Erfindung näher erläutern.

Folgende Farbstoffe kamen zur Anwendung:

### Farbstoff 1:

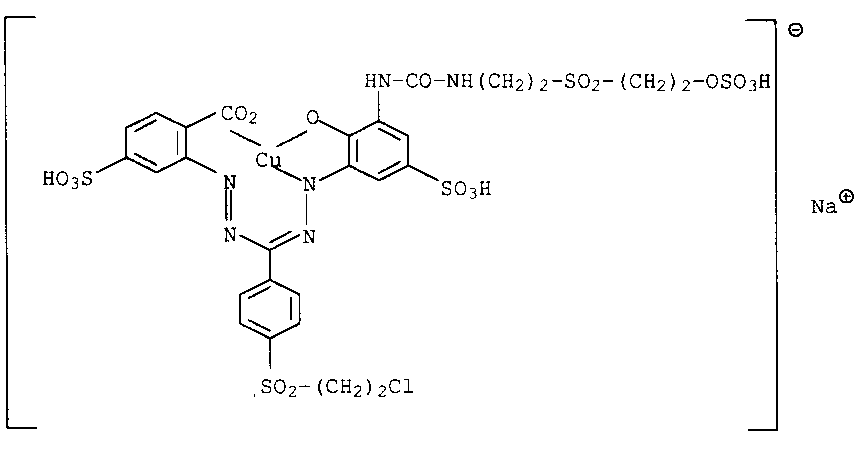

### Farbstoff 2:

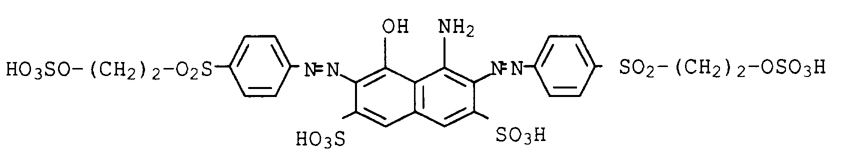

### Beispiel 1

100 g eines Baumwollgarns wurden in einem Bad gefärbt, das 1000 ml Wasser, 12 g einer Mischung aus 6,5 g Farbstoff 1 und 5,5 g Farbstoff 2, 5 g Natriumcarbonat, 1 g 32 gew.-%ige Natronlauge und 60 g Natriumsulfat-dekahydrat enthielt. Man begann mit dem Färben bei 30°C, erhöhte die Temperatur innerhalb von 30 Minuten auf 50°C und färbte noch weitere 60 Minuten bei dieser Temperatur. Nach dem Abkühlen wurde das Garn gespült und kochend geseift. Man erhielt eine tiefe Marineblaufärbung mit sehr guter Licht- und Waschechtheit.

### Beispiel 2

Baumwollgewebe wurde auf einem Foulard bei Raumtemperatur mit einer Färbeflotte getränkt, die je 1000 g Flotte, 60 g einer Farbstoffmischung aus 24 g Farbstoff 1, 36 g Farbstoff 2, 50 g Natronwasserglas (38° Bé) und 30 g 32 gew.-%ige Natronlauge enthielt. Nach dem Imprägnieren unter 70 % Flottenaufnahme wurde das Gewebe aufgerollt und nach Umschließen mit einer Folie während 8 Stunden bei Raumtemperatur in feuchtem Zustand gelagert. Danach wurde gespült und kochend geseift. Man erhielt eine tiefe Marineblaufärbung mit hervorragenden Echtheiten.

## Patentansprüche

1. Mischungen von Reaktivfarbstoffen, enthaltend die Farbstoffe der Formeln I und II 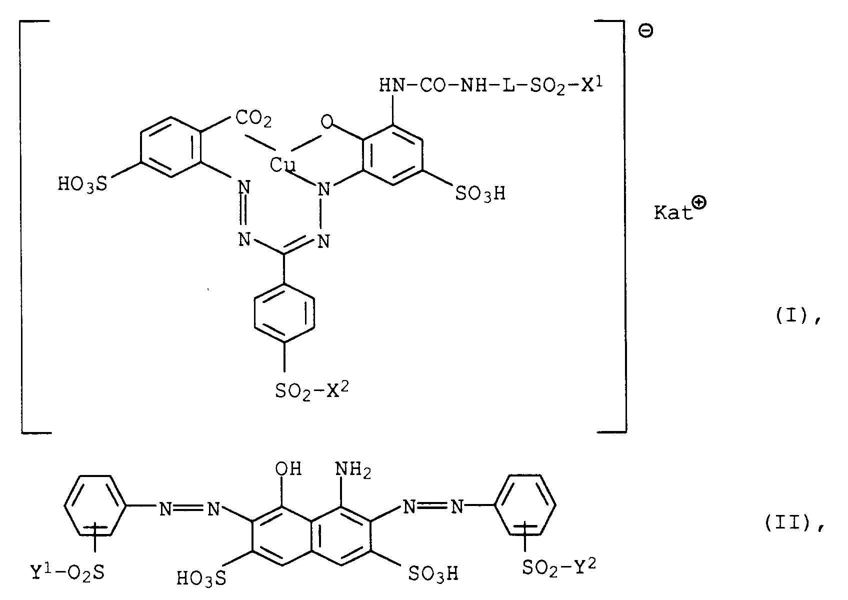 worin Kat^{⊕} das Äquivalent eines Kations, L C₂-C₄-Alkylen und X¹, X², Y¹ und Y² unabhängig voneinander jeweils Vinyl oder einen Rest der Formel C₂H₄-Q, worin Q für eine unter alkalischen Reaktionsbedingungen abspaltbare Gruppe steht, bedeuten, im Gewichtsverhältnis 20:80 bis 90:10.

2. Farbstoffmischungen nach Anspruch 1, enthaltend den Reaktivfarbstoff der Formel IIa 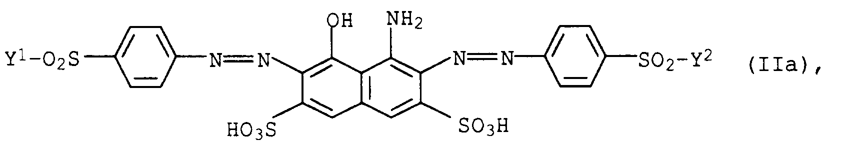 in der Y¹ und Y² jeweils die in Anspruch 1 genannte Bedeutung besitzen.

3. Farbstoffmischungen nach Anspruch 1, dadurch gekennzeichnet, daß L C₂-Alkylen bedeutet.

4. Farbstoffmischungen nach Anspruch 1, dadurch gekennzeichnet, daß X¹, Y¹ und Y² jeweils 2-Sulfatoethyl und X² 2-Chlorethyl bedeuten.

5. Farbstoffmischungen nach Anspruch 1, enthaltend die Farbstoffe der Formeln I und II im Gewichtsverhältnis 30:70 bis 70:30.

6. Farbstoffmischungen nach Anspruch 1, enthaltend die Farbstoffe der Formeln I und II im Gewichtsverhältnis 40:60 bis 60:40.

7. Verwendung der Farbstoffmischungen gemäß Anspruch 1 zum Färben oder Bedrucken von Hydroxygruppen oder Stickstoffatome aufweisenden organischen Substraten.
